# FASCICULE DE BREVET EUROPEEN

(11) **EP 1 757 821 B1**
(45) Date de publication et mention de la délivrance du brevet: **16.01.2008**
(21) Numéro de dépôt: 06291220.9
(22) Date de dépôt: 27.07.2006
(51) Int. Cl.: F16B 19/10

(54) **Dispositif d'ancrage à double mode de fixation**
Ankervorrichtung welche zwei Möglichkeiten zur Befestigung aufweist
Anchor device which comprises two possibilities for the attachment

(30) Priorité: 24.08.2005 FR 0508724
(43) Date de publication de la demande: 28.02.2007
(73) Titulaire: LEGRAND FRANCE, 87000 Limoges (FR); LEGRAND SNC, 87000 Limoges (FR)
(72) Inventeur: Degranges, Nicolas, 87260 Saint Hilaire Bonneval (FR); Hasholder, Florent, 87260 Vicq sur Breuilh (FR); Renaud, Laurent, 87410 Le Palais sur Vienne (FR)
(74) Mandataire: Bentz, Jean-Paul

(56) Documents cités:
- DE-U1- 9 315 489

## Description

L'invention concerne, de façon générale, les systèmes de fixation utilisés notamment pour la fixation réversible de boîtiers divers, par exemple de boîtiers électriques.

Plus précisément, l'invention concerne un dispositif d'ancrage, comprenant une tête et une pince montées à rotation l'une par rapport à l'autre autour d'un axe longitudinal commun, cette pince étant dotée d'une paire de branches symétriques l'une de l'autre par rapport à un premier plan axial médian, reliées l'une à l'autre par un pont et terminées à leurs extrémités libres par des reliefs de retenue respectifs portés sur des faces externes respectives de ces branches, et la tête étant dotée d'une butée centrale de verrouillage s'étendant entre les branches de la pince et présentant, dans un second plan axial médian perpendiculaire au premier, une section de première ou de deuxième largeur selon que la tête et la pince adoptent une première ou une deuxième position angulaire relative, la butée centrale empêchant un rapprochement des branches l'une de l'autre dans la première position angulaire, et s'effaçant, dans la deuxième position angulaire, entre les branches qui adoptent alors une position de libre rapprochement élastique, ce dont il résulte que la pince peut être sélectivement ancrée dans une fente grâce à ses reliefs de retenue puis verrouillée par maintien en écartement forcé de ses branches (DE 93 154 894).

Des dispositifs de ce type, généralement réalisés en matériau thermoplastique sont connus et utilisés dans l'art antérieur.

Ces dispositifs, spécifiquement conçus pour pouvoir s'ancrer dans une fente, s'avèrent aujourd'hui inutilisables chaque fois que l'unique support disponible est constitué par un câble ou un grillage.

Une voie a priori possible pour résoudre ce problème consisterait à développer d'autres dispositifs d'ancrage, spécifiquement adaptés à ce type de supports.

Dans ce contexte, la présente invention a précisément pour but d'éviter une telle approche, qui conduit à développer et à gérer plusieurs types de dispositifs d'ancrage.

A cette fin, le dispositif d'ancrage de l'invention, par ailleurs conforme à la définition générique qu'en donne le préambule ci-dessus, est essentiellement caractérisé en ce que chaque branche de la pince est fendue et formée de deux demi-branches symétriques l'une de l'autre par rapport au second plan axial médian, en ce que les demi-branches de chaque branche présentent des encoches respectives en regard l'une de l'autre, et en ce que la tête présente deux joues symétriques l'une de l'autre enserrant les deux demi-branches de chaque branche dans l'une des première et deuxième positions angulaires et permettant à ces demi-branches de s'écarter élastiquement l'une de l'autre dans l'autre des première et deuxième positions angulaires, ce dont il résulte que la pince peut aussi être sélectivement ancrée sur un support grâce à ses encoches et verrouillée par rapprochement forcé des demi-branches de chacune de ses deux branches.

Par son agencement, le dispositif d'ancrage de l'invention peut ainsi se fixer aussi bien dans une fente que sur un support prenant la forme d'un fil ou d'un grillage.

Dans le mode de réalisation préféré de l'invention, les joues enserrent les deux demi-branches de chaque branche dans la première position angulaire et la butée centrale traverse un orifice pratiqué dans le pont de la pince.

La tête et la pince peuvent être fixes en translation l'une par rapport à l'autre suivant l'axe longitudinal.

Par exemple, la tête comporte une paroi frontale reliant les joues et dont une face interne porte la butée centrale.

La tête peut avantageusement s'inscrire dans un cylindre, les joues étant alors formées de portions de parois latérales cylindriques et la paroi frontale formant un fond pour le cylindre.

De préférence, le pont reliant les branches de la pince est adjacent à la face interne de la paroi frontale de la tête et bloque la pince en translation par rapport à la tête suivant une première direction parallèle à l'axe longitudinal.

Il peut être opportun de prévoir que les joues portent, sur leur face interne, des segments respectifs d'une première nervure circulaire de retenue, que les branches portent, sur leur face externe, des segments respectifs d'une deuxième nervure circulaire de retenue, et que les première et deuxième nervures de retenue coopèrent pour bloquer la pince en translation par rapport à la tête suivant une deuxième direction inverse de la première, tout en autorisant la rotation relative de la tête et de la pince autour de l'axe longitudinal.

Pour faciliter l'insertion du dispositif d'ancrage de l'invention aussi bien dans une fente que sur un support filaire, chacune des demi-branches peut présenter au moins un double biseau à son extrémité libre.

Enfin, pour faciliter le verrouillage du dispositif d'ancrage de l'invention, la paroi frontale de la tête présente une face externe par exemple dotée d'un relief ou d'une cavité propre à recevoir un couple d'entraînement de la tête en rotation.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue agrandie éclatée et en perspective d'un dispositif d'ancrage conforme à l'invention;
- la figure 2 est une vue en perspective à plus petite échelle du dispositif illustré à la figure 1, observé du côté de sa tête;
- la figure 3 est une vue en perspective à plus petite échelle du dispositif illustré à la figure 1, observé du côté des extrémités libres de ses branches;
- la figure 4 est une vue en perspective d'un dispositif conforme à l'invention fixé dans une fente;
- la figure 5 est une vue de côté du dispositif illustré à la figure 4;
- la figure 6 est une vue en perspective d'un dispositif conforme à l'invention fixé sur un support filaire et observé du côté des extrémités libres de ses branches;
- la figure 7 est une vue en perspective d'un dispositif conforme à l'invention fixé sur un support filaire et observé du côté de sa tête;
- la figure 8 est une vue en coupe d'un dispositif conforme à l'invention, inséré dans un boîtier à fixer sur un support à fente, ce dispositif d'ancrage étant représenté dans la configuration qu'il occupe avant sa fixation dans la fente;
- la figure 9 est une vue en coupe d'un dispositif conforme à l'invention, inséré dans un boîtier à fixer sur un support à fente, ce dispositif d'ancrage étant représenté dans la configuration qu'il occupe après sa fixation dans la fente;
- la figure 10 est une vue en coupe d'un dispositif conforme à l'invention, inséré dans un boîtier à fixer sur un support filaire, ce dispositif d'ancrage étant représenté dans la configuration qu'il occupe avant sa fixation sur ce support; et
- la figure 11 est une vue en coupe d'un dispositif conforme à l'invention, inséré dans un boîtier à fixer sur un support filaire, ce dispositif d'ancrage étant représenté dans la configuration qu'il occupe après sa fixation sur ce support.

Comme annoncé précédemment, l'invention concerne un dispositif d'ancrage essentiellement constitué d'une tête 1 et d'une pince 2 montées à rotation l'une par rapport à l'autre autour d'un axe longitudinal commun Z.

La pince 2 est dotée d'une paire de branches 21 et 22, symétriques l'une de l'autre par rapport à un plan axial médian M1 et reliées l'une à l'autre par un pont 20 dans lequel est pratiqué un orifice central 200.

Ces branches 21 et 22 présentent, sur les faces externes de leurs extrémités libres respectives, des reliefs de retenue respectifs 210 et 220.

La tête 1 est dotée d'une butée centrale de verrouillage 13 qui traverse l'orifice 200 du pont 20 et qui s'étend entre les branches 21 et 22 de la pince 2.

Cette butée 13 est par exemple conformé en coin pour présenter, dans le plan axial médian M2 qui est perpendiculaire au premier plan axial médian M1, une section dont la largeur dépend de la position angulaire relative de la tête et des branches 21 et 22.

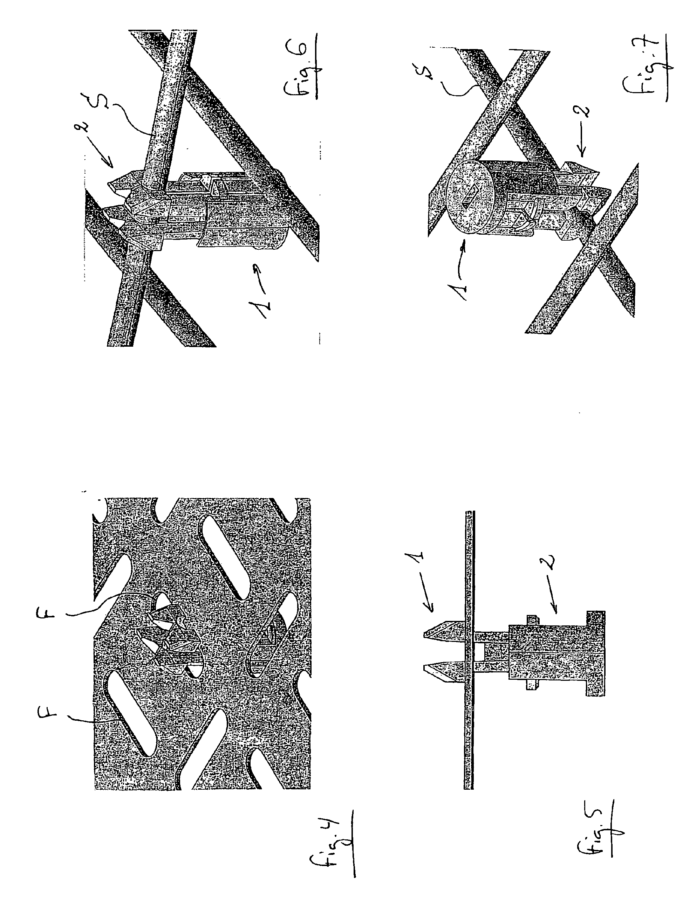

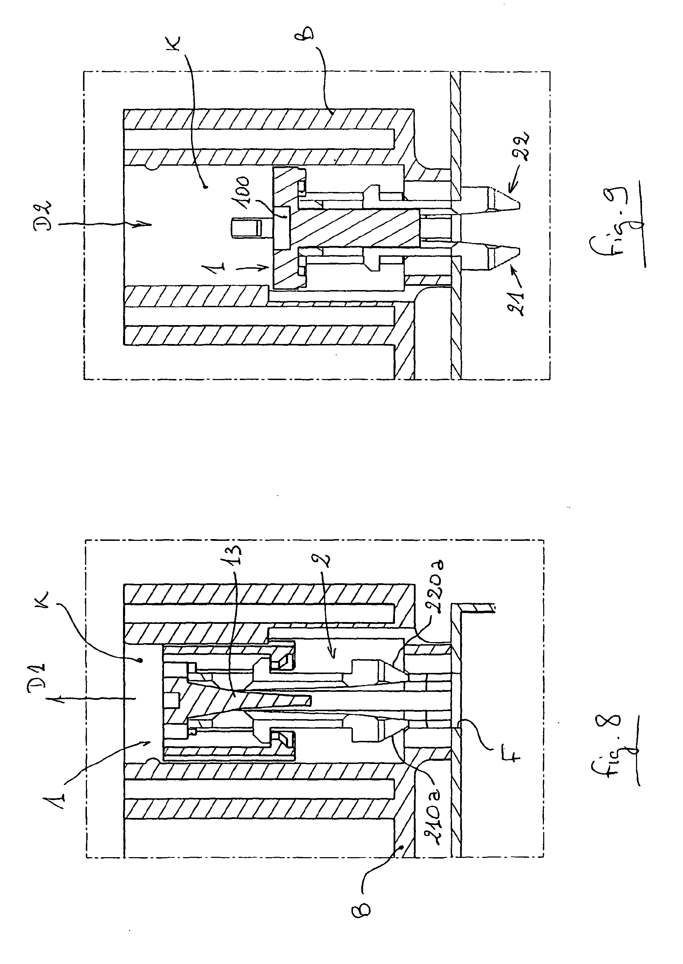

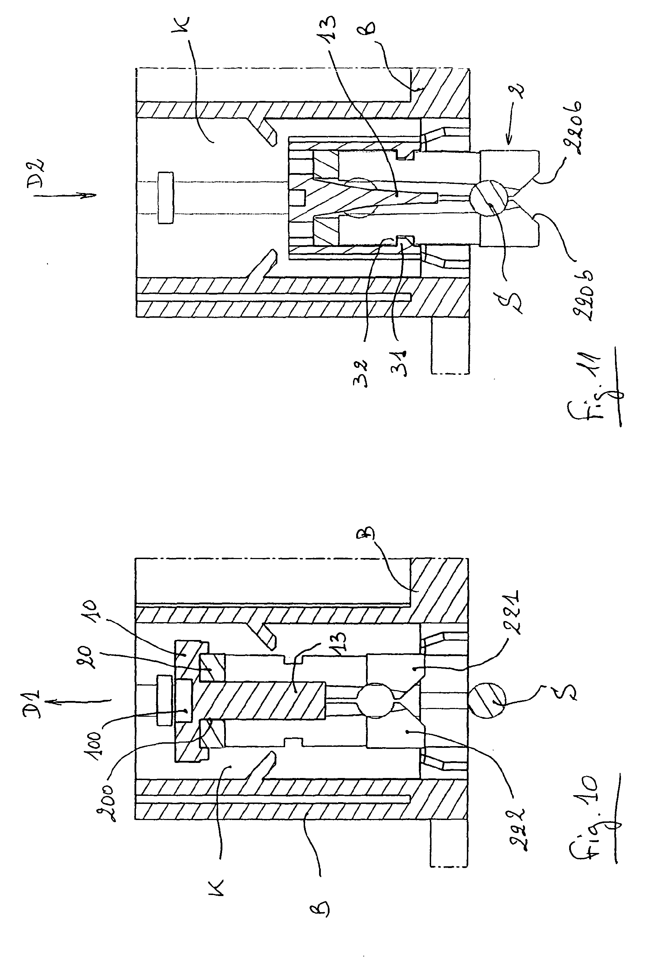

Plus précisément, lorsque la tête 1 et la pince 2 adoptent une première position angulaire relative, qui est celle qu'illustrent les figures 4 à 7, 9 et 11, la butée centrale 13 présente dans le plan M2 sa section de plus grande largeur et empêche les branches 21 et 22 de se rapprocher l'une de l'autre.

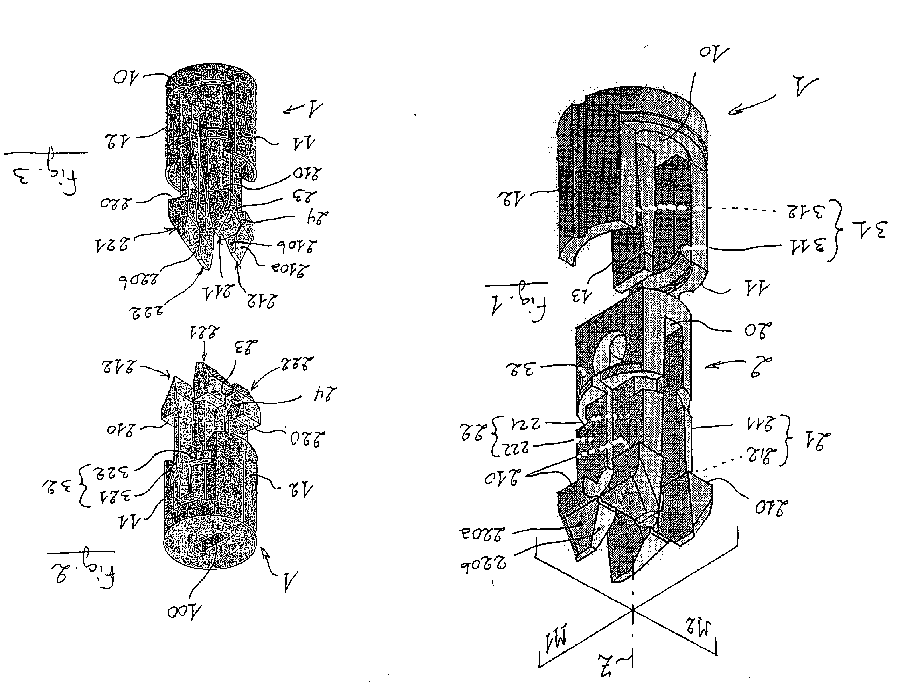

En revanche, lorsque la tête 1 et la pince 2 adoptent une deuxième position angulaire relative, qui est orthogonale à la première et qui est celle qu'illustrent les figures 2, 3, 8, et 10, la butée centrale 13 présente dans le plan M2 sa section de plus faible largeur et s'efface entre les branches 21 et 22 qui adoptent alors une position de libre rapprochement élastique.

En plaçant la tête 1 et la pince 2 dans leur deuxième position angulaire relative, il est ainsi possible d'insérer (figure 8) les extrémités libres des branches 21 et 22 de la pince 2 dans une fente F, l'extrémité libre de chacune de ces branches présentant avantageusement, à cet effet, un biseau externe tel que 210a et 220a.

Il est ensuite possible de verrouiller la pince 2 dans la fente F grâce à ses reliefs de retenue 210 et 220 en opérant une rotation relative de la tête 1 et la pince 2 qui les amène dans leur première position angulaire relative et dans laquelle la butée centrale 13 empêche le rapprochement des branches 21 et 22 de la pince 2 et rétablit donc leur écartement naturel (figure 9) à l'encontre de la force élastique de rapprochement qu'exercent sur elles les bords de la fente.

Selon l'invention, chacune des branches 21 et 22 de la pince 2 est fendue et formée de deux demi-branches symétriques l'une de l'autre par rapport au second plan axial médian M2, la branche 21 comprenant ainsi deux demi-branches 211 et 212, et la branche 22 comprenant deux demi-branches 221 et 222.

D'autre part, les demi-branches de chaque branche présentent des encoches respectives en regard l'une de l'autre et conformées en arcs de cercle de même rayon, les demi-branches 211 et 221 présentant ainsi des encoches 23, et les demi-branches 212 et 222 présentant des encoches 24.

D'autre part encore, la tête 1 présente deux joues 11 et 12 symétriques l'une de l'autre par rapport à l'axe de rotation Z.

Selon la position angulaire qu'adoptent la tête 1 et la pince 2, les joues 11 et 12 enserrent les deux demi-branches de chaque branche 21 et 22 en les rapprochant l'une de l'autre, ou permettent à ces demi-branches de s'écarter élastiquement l'une de l'autre.

Par exemple, les joues 11 et 12 enserrent les deux demi-branches 211 et 212 d'une part, et 221 et 222 d'autre part dans la première position angulaire relative de la tête 1 et de la pince 2, c'est-à-dire la position angulaire illustrée aux figures 4 à 7, 9, et 11, dans laquelle la butée centrale 13 présente sa section de plus grande largeur dans le plan médian M2.

En plaçant la tête 1 et la pince 2 dans leur deuxième position angulaire relative, il est ainsi possible d'engager (figure 10) les extrémités libres des demi-branches 211, 212 et 221, 222 de la pince 2 sur un support S de type filaire jusqu'à ce que la section transversale de ce support S vienne s'inscrire dans les encoches en vis-à-vis 23 et 24, l'extrémité libre de chacune de ces demi-branches présentant avantageusement, à cet effet, un biseau interne tel que 210b et 220b.

Il est ensuite possible de verrouiller la pince 2 sur le support S grâce à ses encoches 23 et 24 en opérant une rotation relative de la tête 1 et la pince 2 qui les amène dans leur première position angulaire relative et dans laquelle les joues 11 et 12 enserrent les deux demi-branches 211 et 212 d'une part, et 221 et 222 d'autre part.

Comme le montrent notamment les figures 1 et 7, la tête 1 comporte une paroi frontale 10 reliant les joues 11 et 12, une face interne de la paroi 10 portant la butée centrale 13, et une face externe de cette paroi étant dotée d'un relief ou d'une cavité 100 propre à recevoir, par exemple de la part d'un tournevis, un couple permettant d'entraîner la tête 1 en rotation par rapport à la pince 2.

Par ailleurs, la tête 1 s'inscrit avantageusement dans un cylindre, les joues 11 et 12 étant alors formées de portions de parois latérales cylindriques, et la paroi frontale 10 de la tête 1 formant un fond pour le cylindre.

De préférence, la tête 1 et la pince 2 sont fixes en translation l'une par rapport à l'autre suivant l'axe longitudinal Z.

Pour ce faire, le pont 20 reliant les branches 21 et 22 de la pince 2 est par exemple adjacent à la face interne de la paroi frontale 10 de la tête 1 (figure 10), de sorte qu'il bloque la pince 2 en translation par rapport à la tête suivant une première direction D1 parallèle à l'axe longitudinal Z.

Par ailleurs, la tête 1 et la pince 2 portent respectivement des première et deuxième nervures circulaires 31 et 32 qui coopèrent entre elles pour bloquer la pince 2 en translation par rapport à la tête 1 au moins suivant une deuxième direction D2 inverse de la première direction D1 (figure 11), tout en autorisant la rotation relative de la tête 1 et de la pince 2 autour de l'axe longitudinal Z.

En pratique, la première nervure circulaire de retenue 31 est par exemple formée de segments 311 et 312 respectivement prévus sur les faces internes des joues 11 et 12, et la deuxième nervure circulaire de retenue 32 est formée de segments 321 et 322 respectivement prévus les faces externes des branches 21 et 22.

Les figures 8 à 11 illustrent une application privilégiée du dispositif d'ancrage de l'invention, permettant la fixation d'un boîtier B indifféremment sur un support à fentes F tel que représenté à la figure 4 ou sur un support à fils S tel que représenté aux figures 6 et 7.

Pour ce faire, le boîtier B est doté d'un ensemble de colonnes ouvertes K dans chacune desquelles un dispositif d'ancrage conforme à l'invention est monté coulissant et prisonnier en translation dans un sens.

Comme le montre une comparaison des figures 8 et 9, l'ancrage du boîtier B sur un support à fentes est obtenu en poussant chacun des dispositifs d'ancrage à l'intérieur de la colonne K correspondante pour insérer les branches 21 et 22 de ce dispositif dans la fente F correspondante, puis en opérant une rotation de 90 degrés de la tête 1 pour empêcher les branches de se rapprocher et donc solidariser le boîtier au support à fentes en maintenant les branches de chaque dispositif d'ancrage écartées contre les bords d'une fente correspondante.

De même, comme le montre une comparaison des figures 10 et 11, l'ancrage du boîtier B sur un support à fils est obtenu en poussant chacun des dispositifs d'ancrage à l'intérieur de la colonne K correspondante pour engager les demi-branches de ce dispositif de part et d'autre d'un fil S, puis en opérant une rotation de 90 degrés de la tête 1 pour resserrer les demi-branches, à la manière des mâchoires d'un étau, sur le fil S, et solidariser ainsi le boîtier au support à fils.

## Revendications

1. Dispositif d'ancrage, comprenant une tête (1) et une pince (2) montées à rotation l'une par rapport à l'autre autour d'un axe longitudinal commun (Z), cette pince (2) étant dotée d'une paire de branches (21, 22) symétriques l'une de l'autre par rapport à un premier plan axial médian (M1), reliées l'une à l'autre par un pont (20) et terminées à leurs extrémités libres par des reliefs de retenue respectifs (210, 220) portés sur des faces externes respectives de ces branches (21, 22), et la tête (1) étant dotée d'une butée centrale de verrouillage (13) s'étendant entre les branches (21, 22) de la pince (2) et présentant, dans un second plan axial médian (M2) perpendiculaire au premier (M1), une section de première ou de deuxième largeur selon que la tête (1) et la pince (2) adoptent une première ou une deuxième position angulaire relative, la butée centrale (13) empêchant un rapprochement des branches (21, 22) l'une de l'autre dans la première position angulaire, et s'effaçant, dans la deuxième position angulaire, entre les branches (21, 22) qui adoptent alors une position de libre rapprochement élastique, ce dont il résulte que la pince (2) peut être sélectivement ancrée dans une fente (F) grâce à ses reliefs de retenue (210, 220) puis verrouillée par maintien en écartement forcé de ses branches (21, 22), **caractérisé en ce que** chaque branche (21, 22) de la pince (2) est fendue et formée de deux demi-branches (211, 212; 221, 222) symétriques l'une de l'autre par rapport au second plan axial médian (M2), **en ce que** les demi-branches (211, 212; 221, 222) de chaque branche (21, 22) présentent des encoches (23, 24) respectives en regard l'une de l'autre, et **en ce que** la tête (1) présente deux joues (11, 12) symétriques l'une de l'autre enserrant les deux demi-branches (211, 212; 221, 222) de chaque branche (21, 22) dans l'une des première et deuxième positions angulaires et permettant à ces demi-branches de s'écarter élastiquement l'une de l'autre dans l'autre des première et deuxième positions angulaires, ce dont il résulte que la pince (2) peut aussi être sélectivement ancrée sur un support (S) grâce à ses encoches (23, 24) et verrouillée par rapprochement forcé des demi-branches (211, 212; 221, 222) de chacune de ses deux branches (21, 22).

2. Dispositif d'ancrage suivant la revendication 1, **caractérisé en ce que** les joues (11, 12) enserrent les deux demi-branches (211, 212; 221, 222) de chaque branche (21, 22) dans la première position angulaire.

3. Dispositif d'ancrage suivant la revendication 1 ou 2, **caractérisé en ce que** la butée centrale (13) traverse un orifice (200) pratiqué dans le pont (20) de la pince (2).

4. Dispositif d'ancrage suivant l'une quelconque des revendications précédentes, **caractérisé en ce que** la tête (1) et la pince (2) sont fixes en translation l'une par rapport à l'autre suivant l'axe longitudinal (Z).

5. Dispositif d'ancrage suivant l'une quelconque des revendications précédentes, **caractérisé en ce que** la tête (1) comporte une paroi frontale (10) reliant les joues (11, 12) et dont une face interne porte la butée centrale (13).

6. Dispositif d'ancrage suivant la revendication 5, **caractérisé en ce que** la tête (1) s'inscrit dans un cylindre, les joues (11, 12) étant formées de portions de parois latérales cylindriques et la paroi frontale (10) formant un fond pour le cylindre.

7. Dispositif d'ancrage suivant la revendication 6, **caractérisé en ce que** le pont (20) reliant les branches (21, 22) de la pince (2) est adjacent à la face interne de la paroi frontale (10) de la tête (1) et bloque la pince (2) en translation par rapport à la tête suivant une première direction (D1) parallèle à l'axe longitudinal (Z).

8. Dispositif d'ancrage suivant la revendication 7, **caractérisé en ce que** les joues (11, 12) portent, sur leur face interne, des segments respectifs (311, 312) d'une première nervure circulaire (31) de retenue, **en ce que** les branches (21, 22) portent, sur leur face externe, des segments respectifs (321, 322) d'une deuxième nervure circulaire (32) de retenue, et **en ce que** les première et deuxième nervures (31, 32) de retenue coopèrent pour bloquer la pince (2) en translation par rapport à la tête (1) suivant une deuxième direction (D2) inverse de la première (D1), tout en autorisant la rotation relative de la tête (1) et de la pince (2) autour de l'axe longitudinal (Z).

9. Dispositif d'ancrage suivant l'une quelconque des revendications précédentes, **caractérisé en ce que** chacune des demi-branches (211, 212; 221, 222) présente au moins un double biseau (210a, 210b, 220a, 220b) à son extrémité libre.

10. Dispositif d'ancrage suivant l'une quelconque des revendications précédentes combinée à la revendication 5, **caractérisé en ce que** la paroi frontale (10) de la tête (1) présente une face externe dotée d'un relief ou d'une cavité (100) propre à recevoir un couple d'entraînement de la tête (1) en rotation.

## Claims

1. Anchoring device, comprising a head (1) and a clamp (2) which are rotationally mounted in relation to one another about a common longitudinal axis (Z), this clamp (2) being provided with a pair of branches (21, 22) which are symmetrical with each other in relation to a first axial mid-plane (M1), and which are interconnected by a bridge (20) and are terminated at their free ends by respective retaining reliefs (210, 220) supported on respective outer faces of the branches (21, 22), and the head (1) being provided with a central locking stop (13) extending between the branches (21, 22) of the clamp (2) and having, in a second axial mid-plane (M2) which is perpendicular to the first mid-plane (M1), a section with a first or a second width depending on whether the head (1) and the clamp (2) adopt a first or a second relative angular position, the central stop (13) preventing the branches (21, 22) from coming together in a first angular position, and being hidden, in the second angular position, between the branches (21, 22) which then adopt a position where they freely and elastically come together, the result being that the clamp (2) can be selectively anchored in a slot (F) thanks to its retaining reliefs (210, 220), then locked by keeping the branches (21, 22) thereof forcibly spaced apart, **characterized in that** each branch (21, 22) of the clamp (2) is split and formed by two half-branches (211, 212; 221, 222) which are symmetrical with one another in relation to the second axial mid-plane (M2), **in that** the half-branches (211, 212; 221, 222) of each branch (21, 22) have respective notches (23, 24) which are opposite each other, and **in that** the head (1) has two cheeks (11, 12) that are symmetrical with each other and which clasp the two half-branches (211, 212; 221, 222) of each branch (21, 22) in one of the first and second angular positions and allow these half-branches to elastically move apart from each other into the other position of the first and second angular positions, the result being that the clamp (2) can also be selectively anchored on a support (S) thanks to the notches (23, 24) thereof and locked by means of the half-branches (211, 212; 221, 222) of each of its two branches (21, 22) being forced together.

2. Anchoring device according to Claim 1, **characterized in that** the cheeks (11, 12) clasp the two half-branches (211, 212; 212, 222) of each branch (21, 22) in the first angular position.

3. Anchoring device according to Claim 1 or 2, **characterized in that** the central stop (13) passes through an opening (200) made in the bridge (20) of the clamp (2).

4. Anchoring device according to any one of the preceding claims, **characterized in that** the head (1) and the clamp (2) are translationally fixed in relation to each other along the longitudinal axis (Z).

5. Anchoring device according to any one of the preceding claims, **characterized in that** the head (1) comprises a transverse wall (10) connecting the cheeks (11, 12), and an inner face of which supports the central stop (13).

6. Anchoring device according to Claim 5, **characterized in that** the head (1) is inscribed in a cylinder, the cheeks (11, 12) being formed by cylindrical side wall portions and the transverse wall (10) forming a bottom for the cylinder.

7. Anchoring device according to Claim 6, **characterized in that** the bridge (20) connecting the branches (21, 22) of the clamp (2) is adjacent to the inner face of the transverse wall (10) of the head (1) and prevents the clamp (2) from moving translationally relative to the head in a first direction (D1) parallel with the longitudinal axis (Z).

8. Anchoring device according to Claim 7, **characterized in that** the cheeks (11, 12) have, on the inner face thereof, respective segments (311, 312) of a first circular retaining rib (31), **in that** the branches (21, 22) have, on the outer face thereof, respective segments (321, 322) of a second circular retaining rib (32), and **in that** the first and second retaining ribs (31, 32) cooperate in order to prevent the clamp (2) from moving translationally relative to the head (1) in a second direction (D2) which is opposite the first direction (D1), while allowing the relative rotation of the head (1) and the clamp (2) about the longitudinal axis (Z).

9. Anchoring device according to any one of the preceding claims, **characterized in that** each of the half-branches (211, 212; 221, 222) has at least one double bevel (210a, 210b, 220a, 220b) at the free end thereof.

10. Anchoring device according to any one of the preceding claims in combination with Claim 5, **characterized in that** the transverse wall (10) of the head (1) has an outer face provided with a relief or a cavity (100) suitable for receiving a torque for rotating the head (1).

## Patentansprüche

1. Verankerungsvorrichtung mit einem Kopf (1) und einer Klemme (2), die drehbar zueinander um eine gemeinsame Längsachse (Z) montiert sind, wobei diese Klemme (2) mit einem Paar Schenkeln (21, 22) versehen ist, die in Bezug zu einer ersten axialen Mittelebene (M1) symmetrisch zueinander sind, miteinander durch einen Steg (20) verbunden sind und an ihren freien Enden mit jeweiligen Haltereliefs (210, 220) enden, die auf den jeweiligen Außenflächen dieser Schenkel (21, 22) gehalten werden, und wobei der Kopf (1) mit einem zentralen Verriegelungsstopper (13) versehen ist, das sich zwischen den Schenkeln (21, 22) der Klemme (2) erstreckt und in einer zweiten axialen Mittelebene (M2) senkrecht zur ersten (M1) einen Abschnitt mit einer ersten oder zweiten Breite aufweist, entlang welcher der Kopf (1) und die Klemme (2) eine erste oder eine zweite relative Winkelposition einnehmen, wobei das zentrale Stopper (13) eine Annäherung der Schenkel (21, 22) zueinander in der ersten Winkelposition verhindert und in der zweiten Winkelposition zwischen den Schenkeln (21, 22) verschwindet, die dann eine Position der freien elastischen Annäherung einnehmen, woraus sich ergibt, dass die Klemme (2) aufgrund ihrer Haltereliefs (210, 220) selektiv in einem Schlitz (F) verankert und dann durch Beibehaltung eines durch die Schenkel (21, 22) erzwungenen Abstands verriegelt werden kann, **dadurch gekennzeichnet, dass** jeder Schenkel (21, 22) der Klemme (2) geteilt ist und aus zwei Halbschenkeln (211, 212; 221, 222) gebildet ist, die zueinander in Bezug zu einer zweiten axialen Mittelebene (M2) symmetrisch sind, dass die Halbschenkel (211, 212; 221, 222) jedes Schenkels (21, 22) Rasten (23, 24) jeweils in Bezug zueinander bilden, und dass der Kopf (1) zwei Seitenteile (11, 12) aufweist, die symmetrisch zueinander sind und die zwei Halbschenkel (211, 212; 221, 222) jedes Schenkels (21, 22) in einer der ersten und zweiten Winkelpositionen einschließen und den Halbschenkeln ermöglichen, sich in der anderen der ersten und zweiten Winkelpositionen elastisch voneinander weg zu bewegen, woraus sich ergibt, dass sich die Klemme (2) aufgrund ihrer Rasten (23, 24) auf einem Träger (S) verankert und durch eine von den Halbschenkeln (211, 212; 221, 222) jeder ihrer beiden Schenkel (21, 22) erzwungenen Annäherung verriegelt werden kann.

2. Verankerungsvorrichtung nach Anspruch 1, **dadurch gekennzeichnet, dass** die Seitenteile (11, 12) die zwei Halbschenkel (211, 212; 221, 222) jedes Schenkels (21, 22) in der ersten Winkelposition umschließen.

3. Verankerungsvorrichtung nach Anspruch 1 oder 2, **dadurch gekennzeichnet, dass** der zentrale Stopper (13) eine Öffnung (200) durchdringt, die in dem Steg (20) der Klemme (2) ausgebildet ist.

4. Verankerungsvorrichtung nach einem der vorhergehenden Ansprüche, **dadurch gekennzeichnet, dass** der Kopf (1) und die Klemme (2) entlang der Längsachse (Z) relativ zueinander verschiebbar befestigt sind.

5. Verankerungsvorrichtung nach einem der vorhergehenden Ansprüche, **dadurch gekennzeichnet, dass** der Kopf (1) eine Vorderwand (10) umfasst, welche die Seitenteile (11, 12) verbindet und deren Innenfläche den zentralen Stopper (13) trägt.

6. Verankerungsvorrichtung nach Anspruch 5, **dadurch gekennzeichnet, dass** der Kopf (1) einen Zylinder beschreibt, wobei die Seitenteile (11, 12) aus zylinderförmigen Seitenwandteilen gebildet sind und die Vorderwand (10) einen Boden für den Zylinder bildet.

7. Verankerungsvorrichtung nach Anspruch 6, **dadurch gekennzeichnet, dass** die Brücke (20), welche die Schenkel (21, 22) der Klemme (2) verbindet, an der Innenfläche der Vorderwand (10) des Kopfes (1) angrenzt und die Klemme (2) gegenüber einer Verschiebung in Bezug zum Kopf in einer ersten Richtung (D1) parallel zur Längsachse (Z) blockiert.

8. Verankerungsvorrichtung nach Anspruch 7, **dadurch gekennzeichnet, dass** die Seitenteile (11, 12) auf ihrer Innenfläche jeweilige Segmente (311, 312) einer ersten kreisförmigen Halterippe (31) tragen, dass die Schenkel (21, 22) auf ihrer Außenfläche jeweilige Segmente (321, 322) einer zweiten kreisförmigen Halterippe (32) tragen, und dass die erste und die zweite Halterippe (31, 32) dahingehend zusammenwirken, die Klemme (2) gegenüber einer Verschiebung in Bezug zum Kopf (1) in einer zweiten Richtung (D2) umgekehrt zur ersten (D1) zu blockieren, wobei die Relativdrehung des Kopfes (1) und der Klemme (2) um die Längsachse (Z) zugelassen ist.

9. Verankerungsvorrichtung nach einem der vorhergehenden Ansprüche, **dadurch gekennzeichnet, dass** jeder der Halbschenkel (211, 212; 221, 222) wenigstens eine Doppelabschrägung (210a, 210b, 220a, 220b) an seinem freien Ende aufweist.

10. Verankerungsvorrichtung nach einem der vorhergehenden Ansprüche, kombiniert mit Anspruch 5, **dadurch gekennzeichnet, dass** die Vorderwand (10) des Kopfes (1) eine Außenfläche aufweist, die mit einem Relief oder einer Austiefung (100) versehen ist, das/die ein Antriebsmoment zur Drehung des Kopfes (1) aufnehmen kann.
